# EUROPEAN PATENT APPLICATION

(11) **EP 4 813 904 A1**
(43) Date of publication of application: **30.09.2026**
(21) Application number: 26167349.5
(22) Date of filing: 24.03.2026
(51) Int. Cl.: B66F 9/075, B60K 35/22, B66F 9/24

(54) **INDUSTRIAL TRUCK EQUIPPED WITH AN IMPROVED ENERGY CONSUMPTION DISPLAY FUNCTION**

(30) Priority: 28.03.2025 IT 202500006573
(71) Applicant: Toyota Material Handling Manufacturing Italy S.p.A, 40132 Bologna (IT)
(72) Inventor: Foligno, Andrea, 40132 Bologna (IT); Iozzi, Daniele, 40132 Bologna (IT); Pappi, Nicola, 40132 Bologna (IT)
(74) Representative: Hoffmann Eitle

(57) **Abstract**

An industrial truck comprises: an electrical energy storage system, traction means, material handling means, control means configured to acquire a performance profile of the industrial truck, and to control the traction means and/or the material handling means based on the acquired performance profile, and a display (40). The control means are configured to determine a power reference value based on the acquired performance profile, the control means being further configured to control the display so as to display a representation (30, 32) of an instantaneous power value that is supplied by the electrical energy storage system in relation to a representation (31) of the power reference value that is determined based on the performance profile.

## Description

### Field of the disclosure

The present disclosure relates to an industrial truck equipped with an improved energy consumption display function.

### Technical background

It is well known in the art to make industrial trucks intended for use in an industrial site, a warehouse, ports, or the like. Forklift trucks are an example of industrial trucks, which typically include a frame, a mast rotatably mounted on the frame, and a fork slidingly mounted on the mast. The fork is used to lift a load, for example to transport goods in a warehouse.

In recent years, electrically powered industrial trucks, which use lithium-ion, lead-acid or other battery systems, have also become widespread.

It is also common to equip the forklift truck with one or more displays to display control information related to the operation of the truck. The display can typically show various types of control information related to the operation of the truck, including, for example, the speed of the truck, information related to the position of the fork, and also information related to instantaneous energy consumption, for example in the case of industrial truck of the type powered by electric battery.

### Summary of the disclosure

Known forklift trucks do not provide much information about machine's energy consumption. In addition to this, there is a complete lack of qualitative information for drivers on consumption related to their driving style, which can obviously be more or less energy consuming. As a result, drivers are unable to assess the effect of their driving style on the machine's energy consumption. Overall, these factors lead to suboptimal energy use by the drivers and increased costs for truck operations.

In some applications, the industrial truck can be configured so as to be able to set different performance profiles; the different performance profiles can configure different constraints on the operations and functionalities of the industrial truck for one or more working cycles. For example, the maximum permissible energy consumption, as well as other operating parameters, may vary depending on the performance profile in use. However, in this case, the user of the industrial truck is unable to easily and immediately recognize the operating limits set during driving, which can also vary considerably depending on the profile set. This leads to inefficient energy use by drivers, who are unable to assess the impact of their driving style on energy consumption. Furthermore, this causes discomfort while driving and potentially also leads to errors in the driver's assessment about the car's remaining potential, which, in the worst case, can lead to accidents and/or damage.

It is an object of the present disclosure to provide an electrically powered industrial truck which is able to solve one or more of the problems described above. In particular, an object of the disclosure is to make an industrial truck that is configured to effectively provide the driver with useful information about the current operating status of the industrial truck. A further object is to provide an industrial truck that allows consumption of available energy to become more effective, thus reducing machine's operating costs. A further object is to make industrial trucks easier to drive, achieving a satisfactory level of safety.

In view of the above, the present disclosure proposes an industrial truck comprising:
- an electrical energy storage system,
- traction means,
- material handling means,
- control means configured to acquire a performance profile of the industrial truck, and to control the traction means and/or the material handling means based on the acquired performance profile, and
- a display,
wherein the control means are configured to determine a power reference value based on the acquired performance profile, the control means being further configured to control the display so as to display a representation of a value of instantaneous power that is supplied by the electrical energy storage system in relation to a representation of the power reference value that is determined based on the performance profile.

Preferably, the power reference value is a maximum value of the power that can be supplied by the electrical energy storage system.

Preferably, the control means are configured to control the display so as to display a representation of the instantaneous power value in the form of a bar whose length is variable and is associated with the instantaneous power value, said bar extending along a predetermined path.

Preferably, the path along which the bar extends is configured so as to surround a displaying area of the display.

Preferably, the control means are configured to control the display so as to display a numerical indication of the instantaneous power in the displaying area.

Preferably, the control means are configured to control the display so as to display a representation of the reference power value along the path on which the bar extends.

Preferably, if the instantaneous power value exceeds a preset threshold, the bar includes adjacent segments with different graphical characteristics, each graphical characteristic being associated with a preset power range.

Preferably, the maximum extension of the segments with different graphical characteristics varies depending on the reference power value.

Preferably, the segments with different graphical characteristics have a maximum extension which is independent of the reference power value.

Preferably, the performance profile includes one or more or all of a maximum acceleration of the industrial truck, a maximum speed of the industrial truck, a torque curve of a pump of the industrial truck, a torque curve of an electric traction motor, a maximum acceleration of a moving component of the material handling means, a maximum speed of a moving component of the material handling means or a maximum power that can be supplied by the electrical energy storage system.

Preferably, the industrial truck further comprises an input interface configured to receive an input indication of the performance profile from a user of the industrial truck and to provide that indication to the control means.

Preferably, the control means are configured to support a plurality of performance profiles, wherein each performance profile of the plurality of performance profiles is associated with a different reference power value.

### Brief description of the drawings

The present disclosure will be illustrated with reference to exemplary embodiments described with reference to the accompanying drawings.

In the drawings:
- Figure 1 shows an industrial truck according to the present disclosure;
- Figure 2 schematically shows the main components of the industrial truck shown in Figure 1;
- Figures 3-5 show views of the energy consumption by the display under different operating conditions;
- Figures 6-7 show views of zero energy consumption by the display in various alternative embodiments,
- Figure 8 shows a possible implementation of the control unit of the industrial truck.

### Detailed description

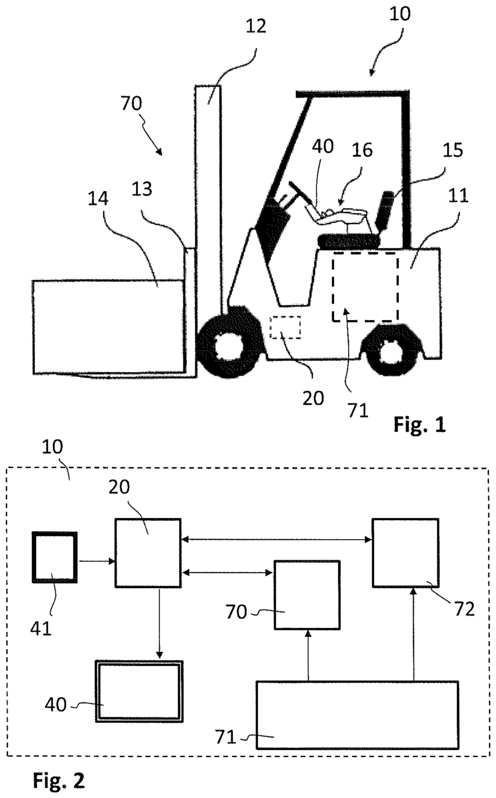

Figure 1 shows an industrial truck 10 according to an embodiment of the present invention, for example a forklift truck. However, it is understood that the present disclosure is not limited to a forklift truck, but also includes other industrial trucks intended for use in industrial sites, ports, logistics centers, warehouses or the like. The industrial truck can be used to handle material, as it is equipped with material handling means 70. In the example shown in the figure, the industrial truck 10 includes a frame 11 and material handling means 70 which include a mast 12 rotatably mounted on the frame 11, and a lifting element 13 (for example a fork) to lift a load 14; the lifting element 13 is mounted on the mast 12 so as to slide along the mast 12; in Figure 1, the lifting element 13 is shown in a lowered position. In an embodiment, for example only, the mast 12 may be mounted in a pivotable manner on the frame 11 about a pivot pin, which is preferably located near the front axle of the truck 10. The mast 12 may be tilted over a range of directions, including a vertical direction.

The industrial truck comprises a user station, for example in the form of a user seat 15. The station can be made in a driver's cabin. The seat 15 can be accommodated in the cabin. The seat may advantageously include an armrest 16 on a seat side. In a preferred embodiment, a display 40 of the industrial truck 10 may be mounted on the armrest 16, for example at an end thereof. However, other configurations are also possible; the present disclosure also covers mounting the display 40 in other positions on the industrial truck 10.

The industrial truck 10 can preferably be electrically powered by means of an electrical energy storage system 71 shown in dotted lines in Figure 1. The electrical energy storage system 71 can be housed, for example, inside the frame 11, either in a removable or integrated and non-removable manner. For example, the electrical energy storage system 71 may be arranged at least partially below the driver's station. The electrical energy storage system 71 may include any battery system, for example one or more battery packs, which may be of lithium-ion or even lead-acid, nickel-metal hydride, or any other known type. Alternatively, the industrial truck could also include an internal combustion engine, or it could include a hybrid drive system, thus equipped with one or more electric and internal combustion engines. Furthermore, the industrial truck 10 may include four wheels or three wheels arranged on a front axle and a rear axle, as well as a steering wheel for steering the truck while driving. However, other multi-axle configurations are also included in the present disclosure. Similarly, other means of issuing commands to the industrial truck may also be used in addition to or in place of the steering wheel, for example a joystick or the like.

The industrial truck 10 includes traction means 72 (shown schematically in Figure 2) intended to enable the truck itself to move. The traction means 72 preferably include one or more electric motors, for example one electric motor for each axle of the industrial truck. Preferably, the traction means 72 are powered by the energy storage system 71, as schematically shown in Figure 2. Preferably, the material handling means 70 are also powered by the energy storage system 71, as schematically shown in Figure 2. According to known art, the material handling means 70 may include a hydraulic pump that feeds hydraulic drives intended to move the movable parts of the material handling means.

The industrial truck 10 further includes a control unit 20 (shown schematically by dotted lines in Figure 1 and by solid lines in the diagram in Figure 2) configured to control the material handling means 70 and/or the traction means 72. In the present disclosure, the control unit 20 may be referred to as "controller 20" or "control means 20", which should be understood as synonymous in the description. Preferably, the control unit 20 is configured to control the material handling means 70 and/or the traction means 72 based on commands issued by a user of the machine via a user interface. The user interface (denoted schematically by the reference numeral 41 in Figure 2) may include a steering wheel, a touchscreen, a keypad, a joystick, one or more pedals, or other command input interfaces or a combination thereof. The control unit 20 may be implemented in any known manner, for example, by means of a processing device, an electronic board, or one or more processing devices. The control unit according to the present disclosure is not limited to any type of hardware and/or software implementation, and may be implemented by a distributed architecture or a single device. As shown in Figure 2, the control unit 20 is connected to the display 40 and is configured to control the display 40 and its operating modes. In an embodiment, the display 40 could be implemented by a touchscreen. In this case, the display 40 could also be part of the input interface of the industrial truck and could be configured to receive input from the truck user via a tactile input.

The industrial truck 10 is configured to operate according to different performance profiles. For example, a performance profile can define a constraint on a service. For example, a performance profile can define a maximum value for an operating parameter of the industrial truck. Preferably, the performance profile includes one or more or all of: a maximum acceleration of the industrial truck, a maximum speed of the industrial truck, a torque curve of a pump of the material handling means of the industrial truck, a torque curve of an electric traction motor, a maximum acceleration of a moving component of the material handling means, a maximum speed of a moving component of the material handling means or a maximum power that can be supplied by the electrical energy storage system. The performance profile may also include one or more of the parameters mentioned above. Preferably, the industrial truck is configured to support a plurality of performance profiles, wherein each performance profile of the plurality of performance profiles is associated with a different reference power value.

The control means 20 are preferably configured to acquire a performance profile of the industrial truck. For example, the performance profile can be entered by a user of the truck via the input interface 41. For this purpose, the input interface 41 is preferably configured to receive an input indication of the performance profile from a user of the industrial truck and to provide that indication to the control means 20. Alternatively, the performance profile could also be set by a signal sent from a remote processing station and received by the industrial truck via appropriate transceiver means (not shown in the figure). The performance profile could also be acquired by the control means from a processing module of the industrial truck (not shown in the figure) configured to determine the performance profile based on industrial truck behavior detected at an early stage of a working cycle. Alternatively, the control means 20 could also be configured to acquire the performance profile from a memory installed on the industrial truck, for example a non-volatile memory. A plurality of performance profiles could be saved in the memory, and the user could select one of the previously saved performance profiles by an input.

The control means 20 are configured to control the traction means 72 and/or the material handling means 70 based on the acquired performance profile. For example, the control means 20 may impose maximum energy consumption while driving, thus ignoring a command which is issued by the user and intended to manoeuvre the industrial truck with energy consumption higher than the maximum one allowed by the performance profile. Similarly, the control means 20 can control the maneuvers carried out by the user by limiting the maximum speed, maximum acceleration, or other operating parameters of the truck's operation.

The control means 20 are configured to determine a power reference value based on the acquired performance profile. Preferably, the power reference value is a maximum value of the power that can be supplied by the electrical energy storage system 71. For example, the performance profile may already include a specific numerical indication of a power reference value. Alternatively, the control means may be configured to derive the power reference value based on other data or quantities included in the performance profile, in the event that the performance profile does not explicitly include an indication of the power reference value.

In a preferred example, the performance profile may include one or more of the following parameters, or all of the following parameters:
- Torque profile (for traction and, if the industrial truck is a forklift truck, for lifting);
- Acceleration (for traction and, if the industrial truck is a forklift truck, for lifting);
- Maximum speed (for traction and, if the industrial truck is a forklift truck, for lifting).

The control means 20 are configured to evaluate one or more, or all of the above parameters to provide aggregate information on the maximum consumption of the machine, which corresponds to the reference power value.

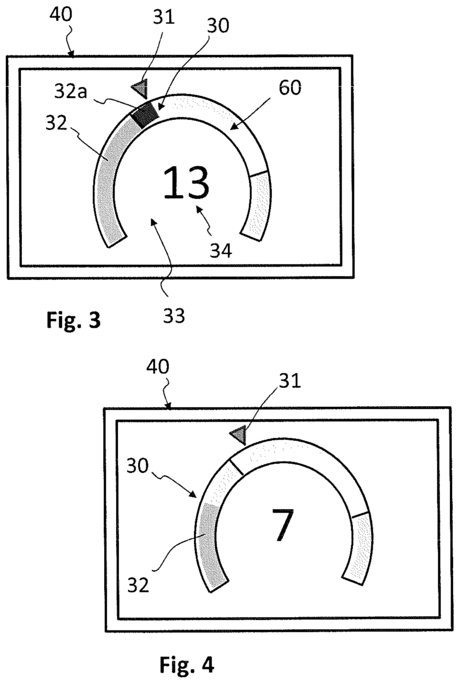

Referring to Figures 3, 4 and 5, the control means 20 are further configured to control the display 40 so as to display a representation 30, 32 of an instantaneous power value that is supplied by the electrical energy storage system in relation to a representation 31 of the power reference value that is determined based on the performance profile. In particular, Figures 3-5 show the display 40 that shows a representation 30, 32 of an instantaneous power value supplied by the electrical energy storage system in relation to a representation 31 of the power reference value.

Preferably, the representation of the instantaneous power value supplied by the electrical energy storage system is displayed in the form of a bar 32, 32a, 32b, whose length is variable and is associated with the instantaneous power value, said bar extending along a predetermined path 60. For example, the path 60 along which the bar 32, 32a, 32b extends is configured so as to surround a displaying area 33 of the display. As shown in Figures 3-5, the path 60 may follow a curvilinear pattern; preferably, the path 60 may follow a path corresponding to a segment of a circle; preferably, the path 60 may follow a path corresponding to a segment of a circle extending over an angle in the range between 180° and 300°, preferably over an angle in the range between 220° and 280°. However, other shapes of the path 60 are also covered by the present disclosure, for example a path may be configured to be straight or even curved but not such as to surround a displaying area.

The control means 20 are configured to control the display 40 so as to display the representation 31 of the power reference value with a graphical representation 31 arranged along the path 60 followed by the bar 32, 32a, 32b. Preferably, the representation 31 is in the form of a pointer indicating a position along the path 60 as followed by the bar 32, 32a, 32b. Preferably, the representation 31 is arranged near the path 60, but not overlapping the path 60. Preferably, the representation 31 has the shape of a triangle with one vertex pointing towards a point on the path 60.

Preferably, each point along the extension of the path 60 is associated with a value of the power supplied by the energy storage system. The value of the power supplied by the energy storage system may correspond to the total value of the power supplied by the energy storage system 71, or even to the value of the power supplied by the energy storage system 71 to one of the traction means 72 or the material handling means 70. In this case, the power reference value may refer to the maximum value of the power that can be supplied by the energy storage system 71 to the traction means or the material handling means.

Preferably, the control means 20 are configured to control the display 40 so as to display, in the dedicated displaying area 33 surrounded by the path 60, a numerical indication 34 of the instantaneous power, for example expressed in kW.

The power reference value derived from the performance profile is the same in Figures 3 and 4, as can be seen from the position of the representation 31 which indicates the same point along the path 60 of the bar. In particular, in Figure 3, the instantaneously supplied power is 13 kW, which corresponds to the reference value indicated by the triangle 31. In this case, the supplied instantaneous power corresponds to the maximum power that can be supplied, as indicated by the representation 31, according to the performance profile in use. Accordingly, the bar 32, 32a ends with its end 30 at the representation 31.

In the case of Figure 4, the maximum power that can be supplied, corresponding to the power reference value indicated by the representation 31, is the same as in the case of Figure 3 but the instantaneous power is lower, being equal to 7 kW. Therefore, in Figure 4, the bar 32 is shorter and ends at the position 30 which is spaced apart from the position indicated by the representation 31 along the path 60. This way, the user knows how much power is still available to the machine in a simple and immediate way, and can assess the impact of their driving style in relation to the set profile. In the case of figure 3, the user is effectively and immediately informed that the maximum level of supplied power has been reached, as the bar 32-32a ends at position 30 which corresponds to a supplied instantaneous power equal to the maximum power indicated by the representation 31. This way, the user is immediately informed that it will not be possible, for example, to accelerate the truck any further or to lift a heavier load or at a higher lifting speed. The control means 20 do not allow instantaneous consumption to exceed the one indicated by the representation 31 and therefore, even if the user issues a command that would increase consumption, that consumption is not allowed by the controller.

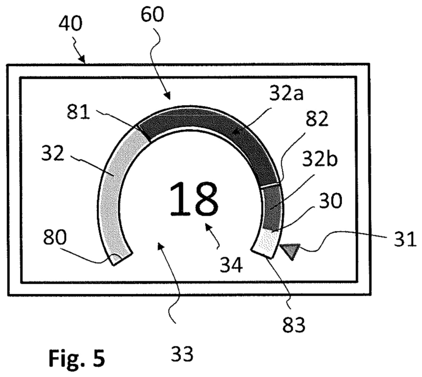

In the example shown in Figure 5, the performance profile currently used by the industrial truck is different and gives rise to a different power reference value, as can be seen from the different representation 31 which is positioned in a different location along the path 60 compared to Figures 3-4. In this case, the maximum power that can be supplied by the energy storage system of the industrial truck is, for example, higher, and is equal to a value slightly above 18 kW. Indeed, the instantaneous power in Figure 5 is equal to 18 kW but the extension of the bar 32, 32a, 32b did not reach the position indicated by the representation 31. This way, the user is informed that the maximum level of power that can be supplied by the energy storage system according to the performance profile in use, has almost been reached.

In the examples shown in Figures 3, 4, and 5, an end of the bar 32, 32a, 32b is always positioned at an end 80 of the path 60, which corresponds to zero instantaneous power; the other end 30 of the bar is positioned at a location along the path 60 that corresponds to the instantaneous power.

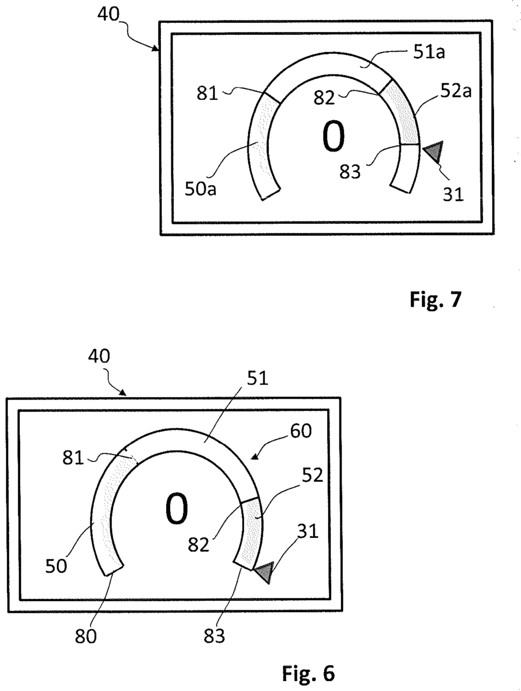

Figure 6 shows the case where the power supplied is zero. The bar 32-32b is not displayed, as it has a length of zero. However, the path 60 can be advantageously displayed, as can the representation of the power reference value 31 which, in this case, is equal to the maximum possible, being positioned at the end of the path 60. Depending on the performance profile acquired, the control means 20 determine the reference power value and, based on this value, determine the representation 31 at a corresponding position along the path 60.

In a preferred embodiment, if the instantaneous power value exceeds a preset threshold, the bar 32, 32a, 32b includes adjacent segments with different graphical characteristics, each graphical characteristic being associated with a preset power range. For example, a graphical characteristic can be a color code (depicted in the figure with different levels of shading); each range (and each segment corresponding to the range) can have a different color. For example, referring to Figure 5, if the bar extends between the point 80 and the point 81 along the path 60, the segment 32 will have a certain graphical characteristic, for example it will be green. If the bar extends beyond the point 81, the segment 32a of the bar following the point 81 will have a different graphical characteristic, for example it may be black (or yellow). If the bar extends beyond the point 82, the segment 32b of the bar following the point 82 may still have a third graphical feature different from those of the previous segments, for example it may be red. The last segment 32b may denote high instantaneous consumption close to the maximum level; the first segment 32 may denote low energy consumption. Preferably, there should be three segments of the bar with different graphical characteristics.

In the examples of Figures 3, 4, 5 and 6, the segments 32, 32a, 32b with different graphical characteristics have a maximum extension which is independent of the reference power value. As a matter of fact, even in the presence of different representations 31 (indicating different maximum reference powers that can be supplied), the points 81, 82, and 83 remain in the same position along the path 60. The points 81, 82, and 83 denote the boundaries of the different segments 32, 32a, and 32b of the bar with different graphical characteristics.

On the other hand, in the case of Figure 7, the positions of the points 81, 82, and 83, which identify the transition between segments of the bar with different graphical characteristics, shift according to the reference power value. Therefore, in this alternative embodiment, the segments with different graphical characteristics have a maximum extension (50, 51, 52, 50a, 51a, 52a) that varies according to the reference power value which is associated with the representation 31. In the example shown in Figure 7, the segment 52a of the path 60 associated with the high consumption range (having, for example, a red representation) ends at the point indicated by the representation 31. Therefore, the representation of the power ranges is associated with the maximum reference power value.

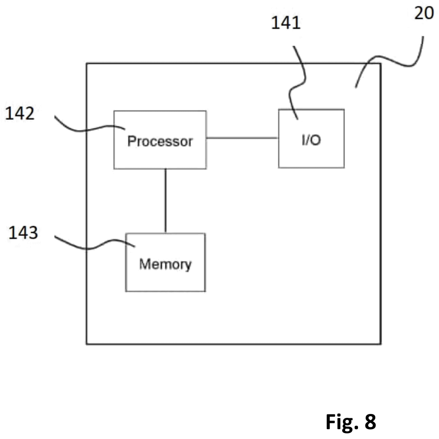

Fig. 8 shows a possible implementation of the control unit 20. In an embodiment, the control unit 20 includes a processor 142, a memory 143 and a I/O interface 141. The processor is configured to execute a control software stored on the memory 143 to execute any of the functions of the control unit 20 as above described. When executing the control software, the processor 142 may receive as input information from one or more sensors and/or units of the industrial truck by means of the I/O interface 141; the processor 142 may further output control signals to the display 40 and/or to one or more actuators of the industrial truck using the I/O interface 141 as well. Also other possible implementations of the control unit can be conceived, e.g. including a plurality of distributed processors or the like.

Therefore, thanks to the present disclosure, the user can be provided with an effective and immediate indication of the power consumption in relation to a reference power that may vary depending on the type of performance profile. This way, regardless of the type of performance profile, the user is able to obtain useful information about the power available that can be supplied from the machine, thus facilitating driving operations and also increasing the level of safety. In addition, the users can assess the impact of their driving style on energy consumption and adapt their style or performance profile accordingly; indeed, the drivers can make more informed choices about their performance profile setting, also assessing the impact thereof on consumption (and consequently on the machine's range). This allows the machine's range to be increased and consumption and costs for the industrial truck operations to be reduced.

## Claims

1. An industrial truck (10) including:
- an electrical energy storage system (71),
- traction means (72),
- material handling means (70),
- control means (20) configured to acquire a performance profile of the industrial truck, and to control the traction means and/or the material handling means based on the acquired performance profile, and
- a display (40),
wherein the control means (20) are configured to determine a power reference value based on the acquired performance profile, the control means being further configured to control the display (40) so as to display a representation (30, 32) of an instantaneous power value that is supplied by the electrical energy storage system in relation to a representation (31) of the power reference value that is determined based on the performance profile.

2. An industrial truck according to claim 1, wherein the power reference value is a maximum value of the power that can be supplied by the electrical energy storage system (71).

3. An industrial truck according to one or more of the preceding claims, wherein the control means (20) are configured to control the display (40) so as to display a representation of the instantaneous power value in the form of a bar (32, 32a, 32b) the length of which is variable and is associated with the instantaneous power value, said bar extending along a predetermined path (60).

4. An industrial truck according to claim 3, wherein the path (60) along which the bar extends (32, 32a, 32b) is configured so that to surround a displaying area (33) of the display.

5. An industrial truck according to claim 4, wherein the control means (20) are configured to control the display (40) so as to display in the displaying area (33) a numerical indication (34) of the instantaneous power.

6. An industrial truck according to one or more of the claims from 3 to 5, wherein the control means are configured to control the display so as to display a representation (31) of the reference power value along the path (60) on which the bar extends (32).

7. An industrial truck according to one or more of the claims from 3 to 6, wherein, if the instantaneous power value exceeds a pre-set threshold (81, 82), the bar (32) includes adjacent segments (32, 32a, 32b) with different graphical characteristics, each graphical characteristic being associated with a pre-set power range.

8. An industrial truck according to claim 7, wherein the segments with different graphical characteristics have a maximum extension (50, 51, 52, 50a, 51a, 52a) that varies according to the reference power value.

9. An industrial truck according to claim 7, wherein the segments with different graphical characteristics have a maximum extension which is independent from the reference power value.

10. An industrial truck according to one or more of the preceding claims, wherein the performance profile includes one or more or all of a maximum acceleration of the industrial truck, a maximum speed of the industrial truck, a torque curve of a pump of the material handling means, a torque curve of an electric traction motor, a maximum acceleration of a moving component of the material handling means, a maximum speed of a moving component of the material handling means or a maximum power that can be supplied by the electrical energy storage system.

11. An industrial truck according to one or more of the preceding claims, further including an input interface (41) configured to receive an incoming indication of the performance profile from a user of the industrial truck and to provide such indication to the control means (20).

12. An industrial truck according to one or more of the preceding claims, wherein the control means are configured to support a plurality of performance profiles, wherein each performance profile of the plurality of performance profiles is associated with a different reference power value.
